# FASCICULE DE BREVET EUROPEEN

(11) **EP 0 751 598 B1**
(45) Date de publication et mention de la délivrance du brevet: **17.03.1999**
(21) Numéro de dépôt: 96420213.9
(22) Date de dépôt: 25.06.1996
(51) Int. Cl.: H02G 3/26, F16L 3/24

(54) **Dispositif pour la fixation d'une console horizontale sur un montant vertical à l'aide d'une clé de verrouillage**
Vorrichtung zum Befestigen einer horizontalen Konsole auf einem vertikalen Ständer mittels einem Schlüssel für Verriegelung
Means for attaching a horizontal bracket to a vertical stand by means of a locking key

(30) Priorité: 27.06.1995 FR 9507958
(43) Date de publication de la demande: 02.01.1997
(73) Titulaire: MAVIL, F-21430 Liernais (FR)
(72) Inventeur: Simon, Bernard, 69300 Caluire (FR)
(74) Mandataire: Monnier, Guy

(56) Documents cités:
- US-A- 3 888 440

## Description

La présente invention a trait à un dispositif pour fixer des consoles horizontales sur des montants verticaux pour le support de chemins de câbles ou toutes autres canalisations en vue du transport de l'énergie ou de fluide.

On connaît des dispositifs de ce genre qui comprennent un montant vertical dont les ailes forment un angle aigu avec l'âme du profilé. Sur le montant sont fixées des consoles par l'intermédiaire de vis et d'écrous qui coopèrent avec des ouvertures adéquates.

Les consoles sont fixées sur les ailes du montant vertical,soit décalées les unes par rapport aux autres, soit tête-bêche.

Par le document US-A-3,888,440, on connaît un dispositif pour supporter des câbles électriques, dans lequel un tube à section sensiblement carrée est pourvu d'orifices de réception d'une unique languette appartenant à une console, une patte de verrouillage étant prévue.

On connaît d'autres dispositifs qui comprennent un montant vertical présentant un profil en forme de C dont les extrémités sont légèrement refermées de manière à constituer une glissière. A l'intérieur de la glissière sont fixées des consoles en forme d'équerre afin que leur face horizontale soit perpendiculaire au fond du montant. Les consoles sont retenues par l'intermédiaire de vis qui permettent de les pincer contre le fond du montant et les extrémités du profil en forme de C. Dans certains cas, les consoles peuvent être montées l'une en face de l'autre c'est-à-dire tête-bêche. Pour cela, le montant vertical présente un profilé en double C dont les bords sont légèrement refermés pour constituer une glissière sur chacune des faces dudit montant.

De tels dispositifs comportent certains inconvénients en ce qui concerne leur coût de fabrication et leur complexité de montage pour aligner deux consoles au même niveau. De plus, l'opérateur rencontre de grandes difficultés pour fixer les consoles au niveau requis lorsque celles-ci sont disposées dans les glissières des montants en forme de C.

C'est à ces inconvénients qu'entend particulièrement remédier la présente invention.

Le dispositif de fixation suivant la présente invention a pour but de permettre une fixation des consoles par encliquetage sur le montant vertical pour éviter l'utilisation de vis et d'écrous.

En outre, le dispositif suivant l'invention comporte une clé ou clavette déformable élastiquement qui permet le verrouillage des consoles sur le montant vertical.

La clavette de maintien permet d'immobiliser chaque console sur le montant vertical dans trois plans perpendiculaires passant par les axes géométriques dudit montant.

On note que le dispositif suivant la présente invention comporte un montant vertical qui présente un profil permettant la fixation des consoles soit tête-bêche, soit à des niveaux différents sans l'utilisation de vis et d'écrous, de manière à réduire le temps de montage.

Le dispositif suivant l'invention comporte un montant vertical muni de deux ailes parallèles l'une à l'autre présentant chacune une nervure verticale et des ouvertures oblongues, au moins une console horizontale comprenant des moyens d'encliquetage opposés qui pénètrent dans les ouvertures oblongues et une clavette de maintien qui coopère d'une part avec l'un des moyens d'encliquetage et d'autre part avec le profil interne de la nervure de l'aile correspondante pour l'immobilisation de la console sur le montant vertical.

La console suivant la présente invention comporte des ailes horizontales et parallèles l'une à l'autre qui se prolongent respectivement à l'une de leurs extrémités par des moyens d'encliquetage.

Un avantage de la console suivant la présente invention consiste en ce que le premier moyen d'encliquetage est constitué d'une butée courbe disposée perpendiculairement à une branche formant le prolongement de l'une des ailes.

Un autre avantage de la console consiste en ce que le second moyen d'encliquetage est constitué d'une patte solidaire d'une languette inclinée dirigée vers le bas en direction de l'une des ailes.

Enfin, la clavette de maintien suivant la présente invention comprend un fond se prolongeant par deux branches verticales qui sont inclinées en direction de l'extérieure de ladite clavette.

Les dessins annexés, donnés à titre d'exemple, permettront de mieux comprendre l'invention, les caractéristiques qu'elle présente et les avantages qu'elle est susceptible de procurer :

Fig. 1 est une vue en perspective éclatée illustrant le dispositif de fixation suivant la présente invention.

Fig. 2 et 3 sont des vues représentant la mise en place pour l'encliquetage des consoles horizontales sur le montant vertical.

Fig. 4 est une vue de face montrant une console horizontale fixée sur le montant vertical par l'intermédiaire d'une clé de verrouillage.

Fig. 5 est une vue de côté suivant V-V (fig. 4) illustrant la console horizontale fixée sur le montant vertical au moyen de la clé de verrouillage.

Fig. 6 est une vue de dessus suivant VI-VI (fig. 5) montrant la mise en place de la clé de verrouillage sur l'un des moyens d'encliquetage de la console horizontale du dispositif de fixation.

Fig. 7 est une vue de dessus suivant VII-VII (fig. 5) représentant le positionnement de la clé de verrouillage entre l'un des moyens d'encliquetage de la console horizontale et l'aile du montant vertical.

Fig. 8 est une vue de dessus suivant VIII-VIII (fig. 5) illustrant le second moyen d'encliquetage de la console horizontale.

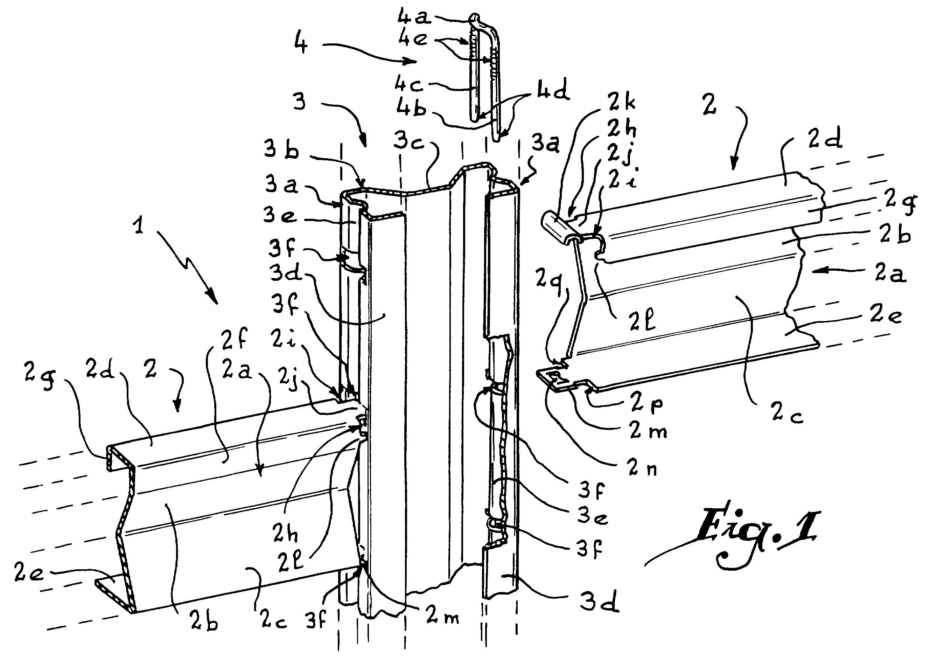

On a représenté en fig. 1 un dispositif 1 permettant la fixation de la console horizontale 2 sur un montant vertical 3 par l'intermédiaire d'une clé de verrouillage ou clavette de maintien 4.

La console 2 comporte une face verticale 2a constituée de deux pans inclinés 2b, 2c qui se prolongent respectivement par une aile horizontale 2d et 2e. L'aile supérieure 2d est reliée au pan incliné 2b par un segment vertical 2f. A l'opposé du segment 2f, l'aile supérieure 2d se prolonge par un retour 2g parallèle au segment 2h et orienté en direction de l'aile inférieure 2e.

A l'une des extrémités de la console 2, l'aile supérieure 2d, le segment 2f et le retour 2g sont découpés pour présenter deux échancrures 2h et 2i délimitant une branche horizontale 2i qui constitue un prolongement de l'aile supérieure 2d mais de largeur inférieure. La branche 2i comporte perpendiculairement à son axe longitudinal une butée à profil courbe 2k formant le premier moyen d'encliquetage de la console 2. La butée 2k est d'une largeur équivalente à celle prévue pour l'aile supérieure 2d afin que ladite butée dépasse de part et d'autre de la branche 2i.

Le segment 2f et le retour vertical 2g comportent à proximité de la butée courbe 2k et en dessous de celle-ci un doigt d'appui 2l oriente en direction de ladite butée.

L'aile inférieure 2e parallèle à l'aile supérieure 2d est découpée pour constituer une patte 2m formant le second moyen d'encliquetage de la console 2. La patte 2m se trouve dans le prolongement de l'aile inférieure 2a et dans un même plan horizontal de cette dernière. La patte 2m est disposée à l'opposé de la butée courbe 2k solidaire de l'aile supérieure 2d. La patte 2m est découpée en son milieu pour constituer une languette 2n qui est inclinée vers le bas en direction de l'aile inférieure 2e. La patte 2m est prévue d'une largeur inférieure à celle constituant l'aile inférieure 2e pour former deux faces d'appui 2p et 2q dont on verra mieux plus loin la fonction.

Le montant vertical 3 présente un profil en sigma dont les ailes 3a sont parallèles l'une à l'autre et réunies entre elles par un voile 3b en forme de cuvette. Le voile 3b comprend une partie centrale 3c se trouvant dans un plan perpendiculaire et médian par rapport aux ailes 3a afin de constituer l'âme du montant vertical 3.

Chacune des ailes 3a se prolonge par un retour 3d disposé dans un même plan vertical et sur toute la hauteur du montant 3. Les retours 3d sont prévus parallèles à la partie centrale 3c mais dans un plan vertical différent.

Chaque aile 3a comporte une nervure centrale 3e dirigée en direction du milieu du montant vertical 3. La nervure centrale 3e est prévue sur toute la hauteur de montant 3. Chaque aile 3a présente plusieurs ouvertures oblongues 3f constituant une segmentation régulière de la nervure 3e sur toute la hauteur du montant 3. En effet, les ouvertures 3f sont disposées à intervalles constants sur toute la hauteur du montant 3. Les ouvertures oblongues 3f sont disposées perpendiculairement à l'axe vertical de chaque aile 3a.

On observe que la largeur des ouvertures 3f est inférieure à celle de la butée courbe 2k et supérieure à celle de la patte 2m de la console 2.

La distance séparant deux ouvertures oblongues 3f peut être variable en fonction de la longueur des consoles à soutenir afin que ces dernières présentent un appui suffisant contre le montant vertical 3 pour résister à la charge.

La clé de verrouillage ou clavette de maintien 4 est réalisée dans un fil métallique déformé pour présenter un fond 4a se prolongeant par deux branches verticales 4b et 4c. Le fond 4a présente un profil courbe de rayon sensiblement identique à celui de la nervure 3e des ailes 3a du montant 3.

Les branches 4b, 4c sont inclinées en direction opposée et vers l'extérieur de la clavette de maintien 4 de manière que la distance prévue aux extrémités libres soit plus grande que celle du fond 4a. Chaque branche 4b, 4c comporte à leur extrémité libre un pan incliné 4d formant une partie bisautée. Un certain nombre de stries sont ménagées sur le diamètre extérieur de chaque branche 4b et 4c et plus particulièrement sur une portion de diamètre opposée à celle portant le pan incliné 4d. Les stries 4e sont situées dans la partie haute des banches 4b et 4c c'est-à-dire à proximité du fond 4a. Les stries 4e s'étendent sur une partie de la hauteur des branches 4b et 4c.

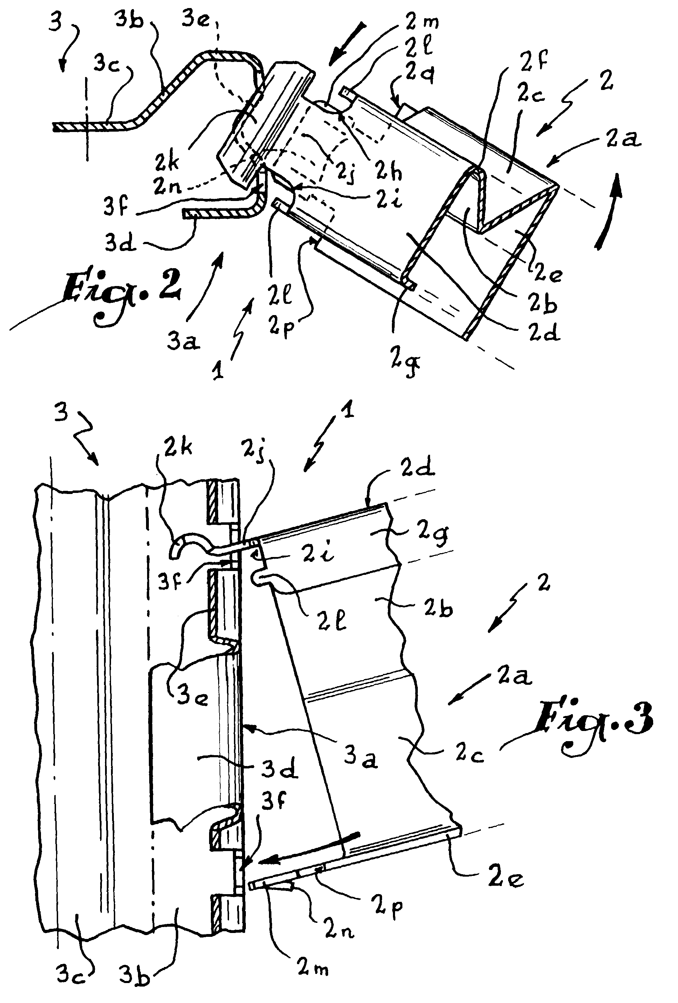

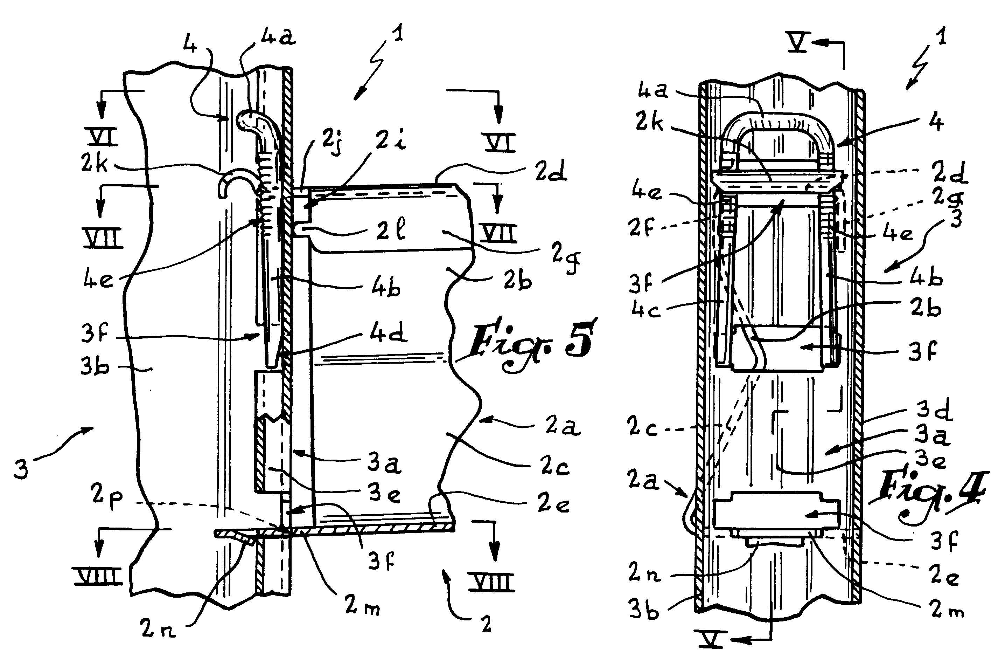

En fig. 2 et 3 on a représenté la mise en place d'une console 2 sur le montant 3 en vue de son encliquetage.

On observe que la console 2 doit être inclinée par rapport au montant 3 pour présenter la butée courbe 2k en biais afin de l'introduire dans l'ouverture 3f correspondante. Ensuite on annexe la console 2 dans un plan horizontal et perpendiculaire au montant 3 pour introduire complètement la butée courbe 2k à l'intérieur de l'ouverture 3f.

Dès que la butée courbe 2k est introduite complètement dans l'ouverture correspondante 3f, on bascule la console 2 en direction du bas pour que le second moyen d'encliquetage constitué par la patte 2m pénètre à l'intérieur d'une seconde ouverture 3f. La retenue de la console 2 dans sa partie inférieure est réalisée par la languette 2m qui vient en appui contre la nervure 3e empêchant la patte 2m de se retirer.

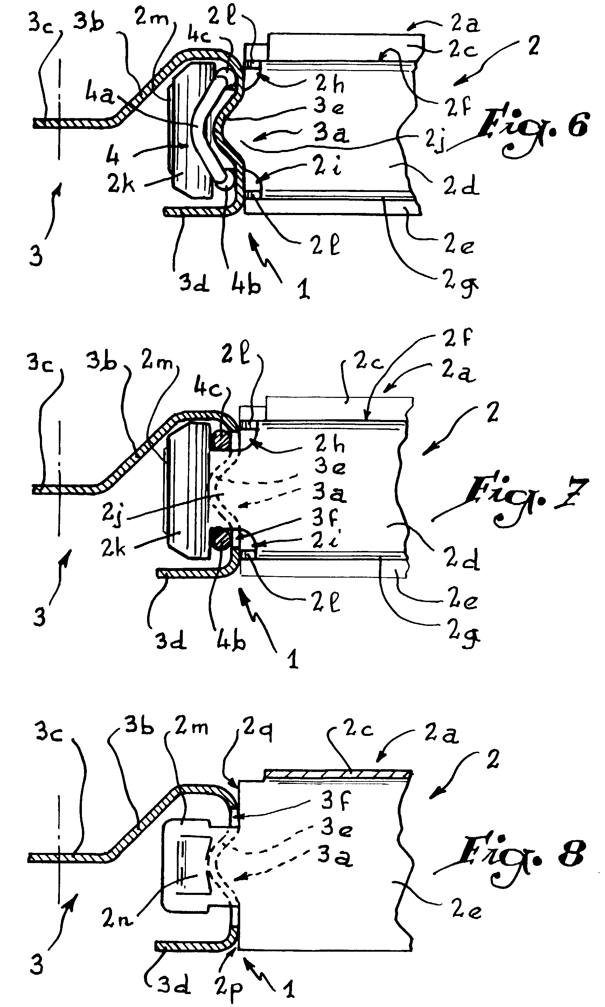

En fig. 4 et 5 on a montré la mise en place de la clavette 4 pour permettre le verrouillage de la console 2 contre le montant vertical 3. La clavette 4 est introduite entre la face interne de l'aile 3a et la butée courbe 2k de la console 2.

La forme particulière de la clavette 4 permet lors de son introduction progressive d'obtenir un rattrapage des jeux en vue d'un auto-blocage et d'un auto-centrage de la console 2 sur le montant 3.

On remarque que les doigts 2l viennent prendre appui contre la face externe de l'aile 3a de part et d'autre de la nervure 3e pour prendre en sandwich l'épaisseur de l'aile 3a entre lesdits doigts et la clavette 4 (fig. 6 et 7).

On observe que les stries 4e sont tournées du côté de la butée courbe 2k pour coopérer avec cette dernière afin de bloquer verticalement la clavette 4.

En outre la distance séparant les branches 4b et 4c au niveau du fond 4a est équivalente à celle de la branche 2i de la console afin d'assurer le serrage définitif de la console 2 (fig. 7).

On constate que la clavette de maintien 4 est introduite dans un plan incliné par rapport à l'aile 3a du montant 3 pour augmenter son coincement entre la butée courbe 2k et la face interne de ladite aile.

Les parties bisautées 4d de la clavette 4 permettent d'améliorer son introduction et son verrouillage entre la butée courbe 2k et la face interne de l'aile 3a.

On note que le dispositif de fixation de la console 2 sur un montant 3 à l'aide d'une clavette 4 permet d'immobiliser ladite console suivant ces trois axes par rapport au montant.

On remarque que le verrouillage de la console 2 s'effectue par la languette inclinée 2n, tandis que la clavette de maintien 4a pour fonction d'améliorer la tenue de l'aile 3a du montant 3 sous l'effort de la butée 2k lorsque la console 2 est chargée.

En effet, sans cette clavette 4 l'aile 3a serait deformée par poinçonnage de la butée 2k sur elle-même en fonction de la charge rapportée par la console 2. Cette déformation apparaitrait au niveau de l'ouverture oblongue 3f qui constitue une zone de moindre résistence de l'aile 3a.

## Revendications

1. Dispositif pour la fixation de consoles sur un montant vertical pour le support de chemins de câbles ou toutes autres canalisations en vue du transport de l'énergie ou de fluides, comportant un montant vertical (3) muni de deux ailes (3a) parallèles l'une à l'autre présentant chacune une nervure verticale (3e) et des ouvertures oblongues (3f), au moins une console horizontale (2) comprenant des moyens d'encliquetage opposés (2k) et (2m) qui pénètrent dans les ouvertures oblongues (3f) du montant (3) et une clavette de maintien (4) qui coopère d'une part avec l'un des moyens d'encliquetage (2k) et d'autre part avec le profil interne de l'aile correspondante (3a) pour l'immobilisation de la console (2) sur le montant vertical (3).

2. Dispositif de fixation suivant la revendication 1, caractérisé en ce que la nervure (3e) de chaque aile (3a) est orientée en direction du milieu du montant (3).

3. Dispositif de fixation suivant la revendication 1, caractérisé en ce que la console (2) comporte des ailes horizontales et parallèles l'une à l'autre (2d) et (2e) qui se prolongent respectivement à l'une de leurs extrémités par les moyens d'encliquetage (2k) et (2m).

4. Dispositif de fixation suivant la revendication 1, caractérisé en ce que le premier moyen d'encliquetage est constitué d'une butée courbe (2k) disposée perpendiculairement à une branche (2j) formant le prolongement de l'aile (2d).

5. Dispositif de fixation suivant la revendication 3, caractérisé en ce que l'aile horizontale (2d) est bordée latéralement par un segment (2f) et un retour (2g) solidaires chacun à proximité de la butée courbe (2k) d'un doigt (2l).

6. Dispositif de fixation suivant la revendication 1, caractérisé en ce que le second moyen d'encliquetage est constitué d'une patte (2m) solidaire d'une languette inclinée (2n) dirigée vers le bas en direction de l'aile (2e).

7. Dispositif de fixation suivant la revendication 1, caractérisé en ce que la butée courbe (2k) est d'une largeur supérieure à celle prévue pour les ouvertures oblongues (3f).

8. Dispositif de fixation suivant la revendication 1, caractérisé en ce que la clavette (4) comprend un fond (4a) se prolongeant par deux branches verticales (4b et 4c) réalisées dans un fil métallique.

9. Dispositif de fixation suivant la revendication 8, caractérisé en ce que le fond (4a) présente un profil courbe de rayon semblable à celui de la nervure (3e) de l'aile (3a) du montant (3).

10. Dispositif de fixation suivant la revendication 8, caractérisé en ce que les branches (4b et 4c) sont inclinées en direction de l'extérieur de la clavette (4).

11. Dispositif de fixation suivant la revendication 8, caractérisé en ce que l'extrémité libre de chaque branche (4b et 4c) comporte un pan incliné (4d) formant une portion biseautée.

12. Dispositif de fixation suivant la revendication 8, caractérisé en ce que les branches (4b et 4c) comportent à proximité du fond (4a) une série de stries (4e) permettant la retenue verticale de la clavette (4).

13. Dispositif de fixation suivant la revendication 12, caractérisé en ce que les stries (4e) sont ménagées sur la portion de diamètre opposée à celle portant les pans inclinés (4d).

## Patentansprüche

1. Befestigungsvorrichtung von Konsolen auf einem vertikalen Ständer für die Abstützung von Kabelwegen oder jeder anderen Leitung in Bezug auf den Transport von Energie oder Fluiden mit einem vertikalen Ständer (3), der mit zwei Seitenflügeln (3a) versehen ist, die parallel zueinander angeordnet sind und die jeweils eine vertikale Rippe (3e) und Langlöcher (3f) aufweisen, mindestens einer horizontalen Konsole (2), die gegenüberliegende Mittel (2k) und (2m) zum Einrasten aufweist, die in die Langlöcher (3f) des Ständers (3) eingreifen und einem Haltekeil (4), der einerseits mit einem der Mittel zum einrasten (2k) und andererseits mit dem inneren Profil der entsprechenden Seitenflügel (3a) zur Festlegung der Konsole (2) auf dem vertikalen Ständer (3) zusammenarbeitet.

2. Vorrichtung nach Anspruch 1,
**dadurch gekennzeichnet,** daß die Rippe (3e) jedes Seitenflügels (3a) in Richtung der Mitte des Ständers orientiert ist.

3. Vorrichtung nach Anspruch 1, dadurch gekennzeichnet, daß die Konsole (2) horizontale und parallel zueinander angeordnete Seitenflügel 82d und 2c) umfaßt, die sich jeweils in eine ihrer Enden durch die Mittel zum Einrasten (2k und 2m) verlängern.

4. Vorrichtung nach Anspruch 1, dadurch gekennzeichnet, daß das erste Mittel zum Einrasten aus einem gekrümmten Anschlag (2k) gebildet wird, der senkrecht zu einem, die Verlängerung des Seitenflügels (2d) bildenden Arm (2j) angeordnet ist.

5. Vorrichtung nach Anspruch 3, dadurch gekennzeichnet, daß der horizontale Seitenflügen (2d) seitlich durch einen Abschnitt (2f) und einen Rückschenkel (2g) eingefaßt ist, die jeweils in der nähe des gekrümmten Anschlages (2k) mit einem Finger (21) fest verbunden sind.

6. Vorrichtung nach Anspruch 1, dadurch gekennzeichnet, daß das zweite Mittel zum Einrasten aus einem Lappen (2m) gebildet wird, der mit einer geeigneten Zunge (2m) fest verbunden ist, die nach unten in Richtung des Seitenflügels (2c) gerichtet ist.

7. Vorrichtung nach Anspruch 1, dadurch gekennzeichnet, daß der gekrümmte Anschlag (2k) eine größere Breite als die die für die Langlöcher (3f) vorgesehen ist, aufweist.

8. Vorrichtung nach Anspruch 1, dadurch gekennzeichnet, daß der Keil 84) einen Boden (40) umfaßt, der sich durch zwei vertikale als Metalldrähte ausgebildete vertikale Arme (4b und 4c) verlängert.

9. Vorrichtung nach Anspruch 8, dadurch gekennzeichnet, daß die Arme (4b und 4c) ein gekrümmtes Profil mit einem gleichartigen Radius wie der Rippe (3e) des Seitenflügels (3a) des Ständers (3) aufweist.

10. Vorrichtung nach Anspruch 8, dadurch gekennzeichnet, daß die Arme (4b und 4c) in Richtung nach außen in Bezug auf den Keil (4) geneigt sind.

11. Vorrichtung nach Anspruch 8, dadurch gekennzeichnet, daß das freie Ende jedes Armes (4b und 4c) eine geneigte Bahn (4d) aufweist, die einen abgeschrägten Bereich bildet.

12. Vorrichtung nach Anspruch 8, dadurch gekennzeichnet, daß die Arme (4b und 4c) in der Nähe des Bodens (4a) eine Reihe von Rillen (4e) umfaßt, die die vertikale Festsetzung des Keils (4) ermöglichen.

13. Vorrichtung nach Anspruch 12, dadurch gekennzeichnet, daß die Rillen (4e) auf dem Durchmesserbereich entgegengesetzt zu dem , der die geneigten Bahn trägt, ausgearbeitet sind.

## Claims

1. Arrangement for the securing of brackets on a vertical stand for supporting cable tracks or other conduits for the conveyance of energy or fluids, comprising a vertical stand (3) provided with two wings (3a) which are parallel to each other and each present a vertical rib (3e) and oblong openings (3f) at least one horizontal bracket (2) including opposed engaging means (2k and 2m) which penetrate into the oblong openings (3f) of the stand (3) and a cotter key (4) which co-operates on one side with one of the engaging means (2k) and on the other side with the internal profile of the corresponding wing for immobilising the bracket (2) on the vertical stand (3).

2. Securing arrangement according to claim 1, characterised in that the rib (3e) of each wing (3a) is oriented in the direction of the middle of the stand (3).

3. Securing arrangement according to claim 1, characterised in that the bracket (2) comprises mutually parallel horizontal wings (2d and 2e) which are respectively extended at one end by the engaging means (2k and 2m).

4. Securing arrangement according to claim 1, characterised in that the first engaging means is constituted by a curved stop (2k) disposed perpendicularly to an arm (2j) forming the extension of the wing (2d).

5. Securing arrangement according to claim 3, characterised in that the horizontal wing (2a) is flanked by a segment (2f) and a flange (2g) each integral with a finger (2l) in the region of the curved stop (2k).

6. Securing arrangement according to claim 1, characterised in that the second engaging means is constituted by a foot (2m) integral with an inclined tongue (2n) which is directed downwardly with respect to the wing (2e).

7. Securing arrangement according to claim 1, characterised in that the curved stop (2k) is of breadth greater than that provided by the oblong openings (3f).

8. Securing arrangement according to claim 1, characterised in that the key (4) comprises a base (4a) extended by two vertical arms (4b and 4c) made in metallic wire.

9. Securing arrangement according to claim 8, characterised in that the base (4a) presents a curved profile of which the radius is similar to that of the rib (3e) in the wing (3a) of the stand (3).

10. Securing arrangement according to claim 8, characterised in that the arms (4b and 4c) are inclined towards the outside of the key (4).

11. Securing arrangement according to claim 8, characterised in that the free end of each arm (4b and 4c) comprises an inclined face (4d) constituting a bevelled part.

12. Securing arrangement according to claim 8, characterised in that the arms (4b and 4c) comprise near the base (4a) a series of grooves (4e) enabling the vertical restraint of the key (4).

13. Securing arrangement according to claim 12, characterised in that the grooves (4e) are provided on the portion diametrically opposed to that carrying the inclined faces (4d).
